# EUROPÄISCHE PATENTANMELDUNG

(11) **EP 4 186 363 A1**
(43) Veröffentlichungstag der Anmeldung: **31.05.2023**
(21) Anmeldenummer: 22209130.8
(22) Anmeldetag: 23.11.2022
(51) Int. Cl.: A01M 21/04

(54) **UNKRAUTBEKÄMPFUNGSVORRICHTUNG, UNKRAUTBEKÄMPFUNGSSYSTEM UND FAHRZEUG**

(30) Priorität: 25.11.2021 DE 102021130936
(71) Anmelder: Sappl, Michael, 83661 Lenggries (DE)
(72) Erfinder: Sappl, Michael, 83661 Lenggries (DE)
(74) Vertreter: Ege Lee & Roider Patentanwälte

(57) **Zusammenfassung**

Unkrautbekämpfungsvorrichtung (300), aufweisend: einen Wärmetauscher (304), der einen Kaltfluideingang (308) sowie einen Heißfluidausgang (310) aufweist, und eine Sprüheinrichtung (316), die mit dem Heißfluidausgang (310) verbunden ist, wobei der Wärmetauscher (304) als Plattenwärmetauscher ausgebildet ist, der den über einen unterstromigen Fluidleitungsanschluss (306) mit einer Fluidleitung (111) verbundenen Kaltfluideingang (308), den Heißfluideingang (310) sowie eine erste Heizfluidverbindung (312) und eine zweite Heizfluidverbindung (314) aufweist und/oder wobei die Unkrautbekämpfungsvorrichtung (300) einen Heizkreis (322), welcher mittels einer Heizkreispumpe (324) ein Heizfluid an eine Heizeinrichtung (326) vorbei und durch Heizfluidanschlüsse (312, 314) im Gegenlauf zu einem Fluid zirkulieren lässt, aufweist; Unkrautbekämpfungssystem, aufweisend: die Unkrautbekämpfungsvorrichtung (300) und eine Fluidtankvorrichtung (200) mit einem Fluidtank (216), der mit dem Kaltfluideingang (308) verbindbar ist; und Fahrzeug (100), aufweisend: die Unkrautbekämpfungsvorrichtung (300) oder das Unkrautbekämpfungssystem.

## Beschreibung

Die Erfindung betrifft eine Unkrautbekämpfungsvorrichtung, ein Unkrautbekämpfungssystem sowie ein mit der Unkrautbekämpfungsvorrichtung oder dem Unkrautbekämpfungssystem ausgestattetes Fahrzeug.

Aus dem Stand der Technik sind die professionellen Heißwasser-Hochdruckreiniger der Firma Kärcher mit der Bezeichnung "Unkrautlanzen WR 20" und "Unkrautlanzen WR 50" bekannt. Die dazugehörige Broschüre: Unkrautbeseitigung mit Heißwasser, [online], [heruntergeladen am 20.10.2021], heruntergeladen von <https://s1.kaercher-media.com/asset/media/file/18490/flyer-unkrautbeseitigung-kvd-2016.pdf>. Diese lehrt die Unkrautvernichtung mittels heißem Wasser und/oder heißem Dampf, wonach Temperaturen von mindestens 90 °C angestrebt werden. Um diese Temperaturen zu erreichen, verfügen die beiden "Unkrautlanzen WR 20" und "Unkrautlanzen WR 50" laut Broschüre über eine Brennertechnologie. Für den stationären Einsatz bietet die Firma Kärcher zum Erreichen von Temperaturen bis maximal 85 °C einen Durchlauferhitzer mit der Bezeichnung "Hochdruckreiniger HWE 860" an. Die dazugehörige Broschüre: HWE 860, [online], [heruntergeladen am 20.10.2021], heruntergeladen von <https://s1.kaercher-media.com/documents/datasheets/machines/de_DE/3.070-030.0_PI_de_DE.pdf>.

Somit sind aus der oben genannten Broschüre zu den "Unkrautlanzen WR 20" und "Unkrautlanzen WR 50" eine Unkrautbekämpfungsvorrichtung gemäß dem Oberbegriff des Anspruchs 1, ein Unkrautbekämpfungssystem gemäß dem Oberbegriff des Anspruchs 6 und ein Fahrzeug gemäß dem Oberbegriff des Anspruchs 8 bekannt.

Der Erfindung liegt die Aufgabe zugrunde, eine eingangs genannte Unkrautbekämpfungsvorrichtung strukturell und/oder funktionell zu verbessern. Außerdem liegt der Erfindung die Aufgabe zugrunde, ein eingangs genanntes Unkrautbekämpfungssystem strukturell und/oder funktionell zu verbessern. Darüber hinaus liegt der Erfindung die Aufgabe zugrunde, ein eingangs genanntes Fahrzeug strukturell und/oder funktionell zu verbessern.

Die Aufgabe wird gelöst mit einer Unkrautbekämpfungsvorrichtung mit den Merkmalen des Anspruchs 1. Außerdem wird die Aufgabe gelöst mit einem Unkrautbekämpfungssystem mit den Merkmalen des Anspruchs 6. Darüber hinaus wird die Aufgabe gelöst mit einem Fahrzeug mit den Merkmalen des Anspruchs 8. Vorteilhafte Ausführungen und/oder Weiterbildungen sind Gegenstand der Unteransprüche.

Die Aufgabe lässt sich auch dadurch lösen, dass, beispielsweise der Oberbegriff und/oder der kennzeichnende Teil, des Anspruchs 1 um mindestens eines der nachfolgenden Merkmale ergänzt wird.

Die Erfindung geht aus von einer Unkrautbekämpfungsvorrichtung, aufweisend: einen Wärmetauscher, der einen Kaltfluideingang sowie einen Heißfluidausgang aufweist, und eine Sprüheinrichtung, die mit dem Heißfluidausgang verbunden ist,

Es wird vorgeschlagen, dass der Wärmetauscher als Plattenwärmetauscher ausgebildet ist, der den über einen unterstromigen Fluidleitungsanschluss mit einer Fluidleitung verbundenen Kaltfluideingang, den Heißfluideingang sowie eine erste Heizfluidverbindung und eine zweite Heizfluidverbindung aufweist und/oder dass die Unkrautbekämpfungsvorrichtung einen Heizkreis, welcher mittels einer Heizkreispumpe ein Heizfluid an eine Heizeinrichtung vorbei und durch Heizfluidanschlüsse im Gegenlauf zu einem Fluid zirkulieren lässt, aufweist.

Der Wärmetauscher kann dazu eingerichtet sein, Wasser auf eine Temperatur von mehr als 85 °C zu erhitzen.

So kann das verwendete Fluid, welches auch als Sprühfluid bezeichnet werden und Wasser sein kann, beispielsweise auf einen der folgenden Temperaturbereiche erhitzt werden: 85 bis 130 °C, 85 bis 120 °C, 85 bis 100 °C, 90 bis 130 °C, 90 bis 120 °C, 90 bis 100 °C, 100 bis 130 °C oder 100 bis 120 °C. Dabei können die Temperaturgrenzen jeweils eingeschossen oder ausgeschlossen sein.

Der Wärmetauscher kann ein Plattenwärmetauscher sein.

Der Wärmetauscher kann eine integrierte elektrische Heizeinrichtung aufweisen, die im Wärmetauscher integriert ist, also beispielswiese zwischen dem Kaltfluideingang und dem Heißfluidausgang angeordnet ist. Alternativ oder zusätzlich kann der Wärmetauscher eine externe Heizeinrichtung aufweisen, die Teil eines Heizkreises ist, welcher dazu eingerichtet ist, von der Heizeinrichtung erhitztes Heizfluid, welches sich vom Fluid unterscheiden kann, mittels mindestens zweier Heizfluidverbindungen in den Wärmetauscher hinein und aus dem Wärmetauscher hinaus zu zirkulieren. Dabei kann der Wärmetauscher ein Gegenlaufwärmetauscher sein, wobei das Fluid und das Heizfluid gegenläufig zum Wärmeaustausch aneinander vorbeigeführt werden.

Die Sprüheinrichtung kann mit einer Unkrauterkennungseinrichtung verbindbar und dazu eingerichtet sein, automatisch nur dann zu sprühen, wenn ein Unkraut von der Unkrauterkennungseinrichtung erkannt wird.

Die Unkrauterkennungseinrichtung kann ein externes Gerät sein, beispielsweise ein mit einer Kamera und einem entsprechenden Programm ausgerüstetes Mobiltelefon. Somit kann jedes Gerät als Unkrauterkennungseinrichtung geeignet sein, das zumindest eine Kamera, einen Prozessor, ein zur Unkrauterkennung aus den mittels der Kamera gewonnen Bildern geeignetes Programm, und eine drahtgebundene oder drahtlose Sendeeinheit, die das Ergebnis der Unkrauterkennung aussenden kann, aufweist. Eine entsprechende Halterung für ein derartiges Gerät kann an der Unkrautbekämpfungsvorrichtung, insbesondere an der Vorrichtungshalterung oder an der Sprüheinrichtung, vorhanden sein.

Die Unkrautbekämpfungsvorrichtung kann die Unkrauterkennungseinrichtung aufweisen und ferner dazu eingerichtet sein, die Sprühdauer der Sprüheinrichtung in Abhängigkeit von dem erkannten Unkraut und/oder einer seit dem Erkennen des Unkrauts verstrichenen Zeit zu steuern.

Die Unkrauterkennungseinrichtung kann ein internes Gerät sein, dass in der Unkrautbekämpfungsvorrichtung, insbesondere in der Vorrichtungshalterung oder in der Sprüheinrichtung, integriert ist. Die oben erwähnte Kamera, der Prozessor, das zur Unkrauterkennung aus den mittels der Kamera gewonnen Bildern geeignete Programm, und die drahtgebundene oder drahtlose Sendeeinheit können allesamt integriert sein.

Alternative oder zusätzliche Kriterien für den Sprühbeginn und/oder die Sprühdauer können sein:
- zentrale oder dezentrale Lage des erkannten Unkrauts auf einem von der Unkrauterkennungseinrichtung verwendeten Bild; und/oder
- Anteil von Unkraut auf einem von der Unkrauterkennungseinrichtung verwendeten Bild.

Die Unkrautbekämpfungsvorrichtung kann ferner eine, beispielsweise standardisierte, Befestigungseinrichtung, beispielsweise Tragstruktur und/oder Tragbalken und/oder Tragstreben und/oder eine Euroaufnahme und/oder eine Dreipunktaufnahme und/oder ein Kuppeldreieck, wie Schnellkuppeldreieck und/oder Weistedreieck, aufweisen.

Alternativ oder zusätzlich kann die Unkrautbekämpfungsvorrichtung mindestens eine weitere, beispielsweise standardisierte, Befestigungseinrichtung, beispielsweise Tragstruktur und/oder Tragbalken und/oder Tragstreben und/oder eine Eurorahme und/oder eine Dreipunktaufnahme und/oder ein Kuppeldreieck, wie Schnellkuppeldreieck und/oder Weistedreieck, aufweisen, beispielsweise zur Anbringung einer Fluidtankvorrichtung mit einer dazu passenden Befestigungseinrichtung.

Die Fluidtankvorrichtung kann ferner eine standardisierte Befestigungseinrichtung, beispielsweise Tragstruktur und/oder Tragbalken und/oder Tragstreben und/oder eine Euroaufnahme und/oder eine Dreipunktaufnahme und/oder ein Kuppeldreieck, wie Schnellkuppeldreieck und/oder Weistedreieck, aufweisen.

Die Fluidtankvorrichtung kann Folgendes aufweisen: eine Fluidtankhalterung, einen Fluidtank, einen Fluidleitungsanschluss sowie einen zwischen dem Fluidtank und dem Fluidleitungsanschluss angeordneten Fluidregler. Die Fluidtankvorrichtung kann außerdem ein als Verlagerungsgetriebe ausgebildetes Getriebe umfassen. Dieses Getriebe kann einen Getriebeeingang, einen ersten Getriebeausgang und einen zweiten Getriebeausgang aufweisen. Ferner kann die Fluidtankvorrichtung einen Generator aufweisen, welcher zur Stromerzeugung mit dem ersten Getriebeausgang verbunden sein kann. Außerdem kann die Fluidtankvorrichtung einen mit dem Generator verbundenen Schaltschrank aufweisen, mit dem die Stromleitung an ihrem einen Ende verbunden sein kann, um von dem Generator erzeugten elektrischen Strom zu der Unkrautbekämpfungsvorrichtung zu führen. Die Fluidtankvorrichtung kann eine Fluidpumpe aufweisen, die beispielsweise durch den zweiten Getriebeausgang angetrieben sein kann, um Fluid aus dem Fluidtank durch die Fluidtankleitung, weiter durch den Fluidregler zu dem Fluidleitungsanschluss, mit dem die Fluidleitung an ihrem einen Ende verbunden werden kann, zu pumpen.

Die Unkrautbekämpfungsvorrichtung oder das Unkrautbekämpfungssystem kann an eine Stromversorgung des Fahrzeugs angeschlossen sein.

Die Stromversorgung des Fahrzeugs kann eine Lichtmaschine, eine Batterie oder eine Brennstoffzelle sein.

Tragstrukturen, beispielsweise Tragbalken, Tragstreben, Eurorahmen, Dreipunktaufnahmen und/oder Kuppeldreiecke, wie Schnellkuppeldreiecke und/oder Weistedreiecke, an der Fahrzeugfront und an dem Fahrzeugheck können die Fluidtankvorrichtung und/oder die Unkrautbekämpfungsvorrichtung fest mit dem Fahrzeug verbinden. Alternativ oder zusätzlich kann das Fahrzeug Hohlräume aufweisen, die zur festen Aufnahme der Fluidtankvorrichtung und/oder der Unkrautbekämpfungsvorrichtung vorhanden sind.

Zusammenfassend und mit anderen Worten dargestellt ergeben sich somit durch die Erfindung unter anderem Vorrichtungen, die eine einfache, flexible und ganzheitlich schadstofffreien Beseitigung von Unkraut ermöglichen. Gleiches gilt für ein mit einer dieser Vorrichtungen ausgestattetes Fahrzeug.

Mit der Erfindung wird die Möglichkeit geschaffen, Unkraut auf eine umweltfreundliche Art und Weise zu beseitigen, indem ein umweltfreundlicher elektrischer Betrieb der entsprechenden Vorrichtung vorgesehen wird. Schließlich kann Strom im Gegensatz zu Treibstoffen, einschließlich synthetischen Treibstoffen, vollkommen klimaneutral hergestellt werden. Diese Möglichkeit des elektrischen Betriebs von Wärmetauschern für die Unkrautbeseitigung bei Hochtemperaturen, d. h. mit Fluidtemperaturen von über 85 °C, ist in dem Stand der Technik weder offenbart noch nahegelegt. So sieht der oben genannte "Hochdruckreiniger HWE 860" einen Durchlauferhitzer vor, der zum Zwecke der Unkrautbeseitigung elektrisch eine Fluidtemperatur von maximal 85 °C erreichen kann.

Folgende Vorteile können erreicht werden: biologische statt chemischer Unkrautbekämpfung, kein mühseliges Ausstechen oder Ausreißen von Unkraut bei gleichzeitig erhöhter Schlagkraft gegen das Unkraut, dadurch auch kein Unkraut, dass entsorgt oder verbrannt werden muss, sehr hohe Erfolgsquote bei der Bekämpfung, und ein großes Einsatzspektrum, zu dem die Landwirtschaft sowie der Garten- und Landschaftsbau im privaten und öffentlichen Sektor zählen. Vorteilhaft ist auch, dass keine besonderen Fachkenntnisse erforderlich sind, wie beispielsweise der "Sachkundenachweis Pflanzenschutz". Dieser Vorteil gilt umso mehr, wenn die Vorrichtungen von einer Unkrauterkennungseinrichtung Gebrauch machen, welche Unkraut selbständig erkennt und die Unkrautbekämpfung aufgrund dieser Erkennung selbständig steuert. Die entsprechenden Vorrichtungen können des Weiteren auf das Fahrzeug, auch Trägerfahrzeug genannt, da es die Vorrichtungen tragen kann, abgestimmt werden. Bei dem Trägerfahrzeug kann es sich um einen Traktor, Schlepper oder Kommunalfahrzeuge handeln. Alternativ ist auch ein stationärer Einsatz der Vorrichtungen möglich. Den Gegebenheiten und Anforderungen entsprechend können die Vorrichtungen leicht und schnell angepasst werden. So können Leitungen im Querschnitt vergrößert, die Anzahl von Heizschwertern in dem Heizkreis und Wärmetauschern erhöht, und/oder leistungsfähigere Generatoren eingebaut werden, wobei letzteres die Anbringung eines breiteren Balkens als Sprüheinrichtung, beispielsweise mittels einer Halterung und/oder Euroaufnahme, erlauben würde. Jede dieser Maßnahmen würde zu einer höheren Schlagkraft bei der Bekämpfung von Unkraut führen. Schließlich sei noch erwähnt, dass aufgrund des rein elektrischen Betriebs der hier beschriebenen Vorrichtungen - im Gegensatz zu den bekannten Hochdruckreinigern und ähnlichen Heißwassermaschinen mit Brennertechnologie - lediglich beim Fahrzeug schädliche Abgase entstehen können. Mit der zunehmenden Anzahl rein elektrisch betriebener Fahrzeuge steigt die Attraktivität der hier beschriebenen Vorrichtungen, welche ohne jegliche Umrüstung erfahren zu müssen auch in Zukunft verwendet werden können.

Nachfolgend werden Ausführungsbeispiele der Erfindung unter Bezugnahme auf Figuren näher beschrieben, dabei zeigen schematisch und beispielhaft:
- Fig. 1: eine Aufsicht eines mittig angeordneten schematischen Fahrzeugs, das links und rechts von einem Unkrautbekämpfungssystem umschlossen wird, wobei das Unkrautbekämpfungssystem eine Fluidtankvorrichtung, die hinten am Traktor, d. h. rechts in der Fig. 1, angebracht ist, und eine Unkrautbekämpfungsvorrichtung, die vorne am Traktor, d. h. links in der Fig. 1, angebracht ist, aufweist,
- Fig. 2: eine Seitenansicht eines schematischen Aufbaus der Fluidtankvorrichtung aus Fig. 1, und
- Fig. 3: eine Seitenansicht eines schematischen Aufbaus der Unkrautbekämpfungsvorrichtung aus Fig. 1.

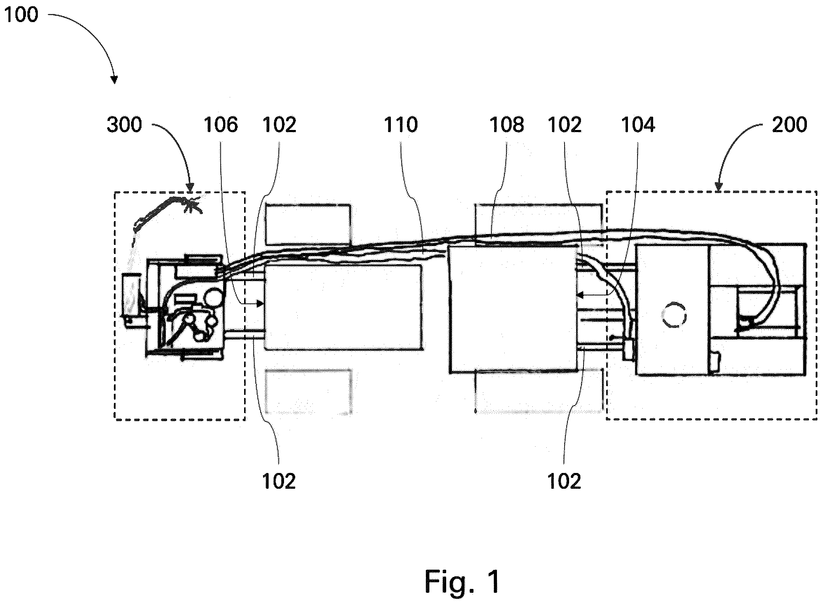

Fig. 1 zeigt eine Aufsicht eines mittig angeordneten als Traktor ausgebildeten Fahrzeugs 100, das (hier bezogen auf Fig. 1) links und rechts von einem Unkrautbekämpfungssystem umschlossen wird, wobei das Unkrautbekämpfungssystem eine Fluidtankvorrichtung 200, die hinten am Fahrzeug 100, d. h. rechts in der Fig. 1, angebracht ist, und eine Unkrautbekämpfungsvorrichtung 300, die vorne am Fahrzeug 100, d. h. links in der Fig. 1, angebracht ist, aufweist.

Das Fahrzeug 100 kann alternativ ein PKW, LKW, Schlepper oder Kommunalfahrzeug sein. Außerdem können das Unkrautbekämpfungssystem oder zumindest Bestandteile davon, wie die Fluidtankvorrichtung 200 oder die Unkrautbekämpfungsvorrichtung 300, auf eine andere Weise am Fahrzeug 100 angebracht sein oder im Fahrzeug 100 teilweise oder vollständig integriert sein. Zur einfacheren Anbringung der Fluidtankvorrichtung 200 und/oder der Unkrautbekämpfungsvorrichtung 300 am Fahrzeug 100 kann an der jeweiligen Vorrichtung eine, beispielsweise standardisierte, Befestigungseinrichtung, beispielsweise eine Tragstruktur und/oder Tragbalken und/oder Tragstreben und/oder eine Euroaufnahme und/oder Dreipunktaufnahme und/oder ein Kuppeldreieck, wie Schnellkuppeldreieck und/oder Weistedreieck, vorgesehen sein.

In Fig. 1 sind die Fluidtankvorrichtung 200 und die Unkrautbekämpfungsvorrichtung 300 zur besseren Abgrenzung von dem als Traktor ausgebildeten Fahrzeug 100 jeweils von einem rechteckigen gestrichelten Rahmen umschlossen. Tragstrukturen 102 an der Fahrzeugfront 104 und an dem Fahrzeugheck 106 verbinden die Fluidtankvorrichtung 200 und die Unkrautbekämpfungsvorrichtung 300 fest mit dem Fahrzeug 100. Selbstverständlich können derartige Tragstrukturen 102 zusätzlich oder alternativ auch seitlich am Fahrzeug 100, über dem Fahrzeug 100 und/oder unter dem Fahrzeug 100 vorgesehen sein. Außerdem kann das Fahrzeug 100 Hohlräume aufweisen, die zur festen Aufnahme der Fluidtankvorrichtung 200 und/oder der Unkrautbekämpfungsvorrichtung 300 vorhanden sind.

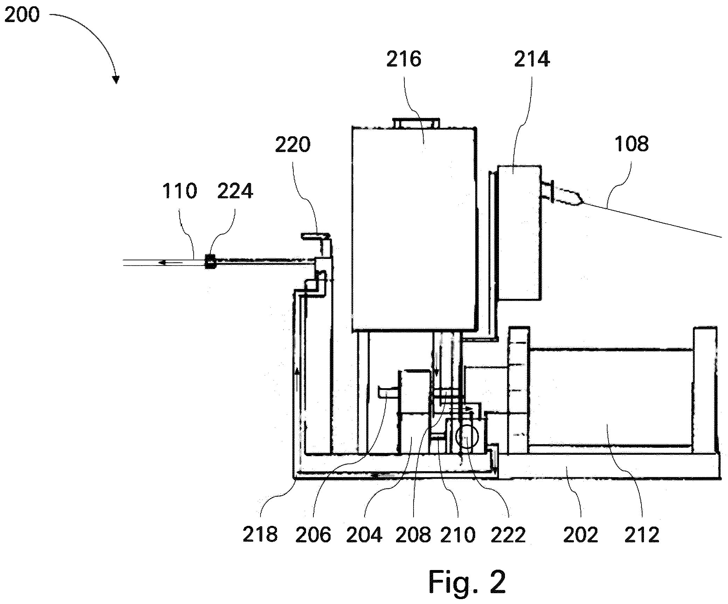

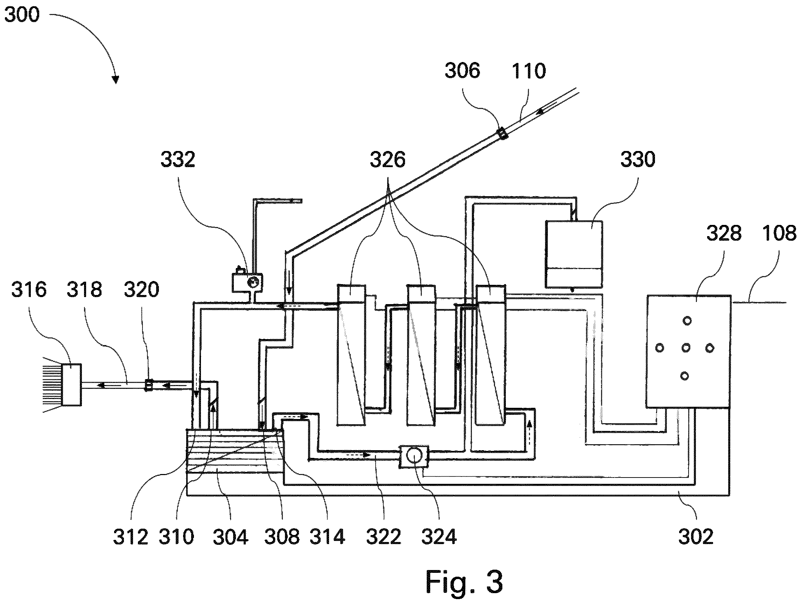

Die Unkrautbekämpfungsvorrichtung 300 ist hier zudem über eine Stromleitung 108 und eine Fluidleitung 110 mit der Fluidtankvorrichtung 200 verbunden. Auf den Aufbau und die Funktionsweise all dieser wird unter Bezugnahme auf die Fig. 2 und Fig. 3 nachfolgend im Einzelnen eingegangen.

Fig. 2 zeigt eine Seitenansicht eines schematischen Aufbaus der Fluidtankvorrichtung 200 aus Fig. 1.

Die Fluidtankvorrichtung 200 umfasst eine Fluidtankhalterung 202, an der weitere Komponenten angebracht sind und die über die nur in der rechten Hälfte der Fig. 1 gezeigten Tragstrukturen 102 mit dem Fahrzeug 100 verbunden ist. Alternativ kann die Verbindung über eine an der Fluidtankhalterung 202 vorhandene Befestigungseinrichtung, beispielsweise Tragbalken und/oder Tragstreben und/oder eine Euroaufnahme und/oder eine Dreipunktaufnahme und/ oder ein Kuppeldreieck, wie Schnellkuppeldreieck und/oder Weistedreieck, erfolgen, die an dem Fahrzeug 100 und/oder an eine am Fahrzeug 100 vorhandene Befestigungseinrichtung, beispielsweise Tragbalken und/oder Tragstreben und/oder eine Euroaufnahme und/oder eine Dreipunktaufnahme und/ oder ein Kuppeldreieck, wie Schnellkuppeldreieck und/oder Weistedreieck, angebracht werden kann. In Fig. 2 würde die jeweilige Verbindung zum Fahrzeug 100 auf der linken Seite der schematischen Darstellung der Fluidtankvorrichtung 200 erfolgen. Die weiteren an der Fluidtankhalterung 202 angebrachten Komponenten umfassen:
- ein als Verlagerungsgetriebe ausgebildetes Getriebe 204, welches einen mit dem Fahrzeug 100 verbindbaren Getriebeeingang 206, einen ersten Getriebeausgang 208 und einen zweiten Getriebeausgang 210 aufweist; und/oder
- ein Generator 212, welcher zur Stromerzeugung mit dem ersten Getriebeausgang 208 verbunden ist; und/oder
- einen mit dem Generator 212 verbundenen Fluidtankschaltschrank 214, mit dem die Stromleitung 108 an ihrem einen Ende verbunden ist, um von dem Generator 212 erzeugten elektrischen Strom zu der unter Bezugnahme auf die Fig. 3 näher beschriebenen Unkrautbekämpfungsvorrichtung 300 zu führen; und/oder
- einen Fluidtank 216, welcher über eine Fluidtankleitung 218 mit einem Fluidregler 220 verbunden ist, sodass Fluid, welches auch als Sprühfluid bezeichnet werden und Wasser sein kann, aus dem Fluidtank 216 mittels einer von dem zweiten Getriebeausgang 210 angetriebenen Fluidpumpe 222 durch die Fluidtankleitung 218, weiter durch den Fluidregler 220 zu einem oberstromigen Fluidleitungsanschluss 224, mit dem die Fluidleitung 110 an ihrem einen Ende verbunden ist, und schließlich durch die Fluidleitung 110 zu der unter Bezugnahme auf die Fig. 3 näher beschriebenen Unkrautbekämpfungsvorrichtung 300 geführt werden kann.

Das Getriebe 204 kann Teil des Fahrzeugs 100 sein und nicht der Fluidtankvorrichtung 200. Des Weiteren kann das Getriebe 204 nur einen Getriebeausgang 208, 210 aufweisen. Statt dem Getriebe 204 und dem Generator 212 kann eine Batterie vorgesehen sein, welche die Stromversorgung über die Stromleitung 108, beispielsweise auch die Stromversorgung der Fluidpumpe 222, übernimmt. Allerdings kann auf eine Batterie verzichtet werden, wenn eine externe Stromquelle, beispielsweise die des Fahrzeugs, zur Verfügung steht. Die Fluidpumpe 222 ist verzichtbar, wenn beispielsweise der Fluidtank 216 ausreichend hoch angeordnet ist, dass das darin enthaltene Fluid aufgrund der Schwerkraft durch die Fluidtankleitung 218 fließen kann. Auf eine Fluidpumpe 222 in der Fluidtankvorrichtung 200 kann auch dann verzichtet werden, wenn in der unter Bezugnahme auf die Fig. 3 näher beschriebenen Unkrautbekämpfungsvorrichtung 300 eine Pumpe vorgesehen ist, die dazu eingerichtet ist, Fluid aus dem Fluidtank 216 durch die Fluidtankleitung 218, weiter durch den Fluidregler 220 zu dem oberstromigen Fluidleitungsanschluss 224 und schließlich durch die Fluidleitung 110 zu der Unkrautbekämpfungsvorrichtung 300 zu saugen.

Im einfachsten Fall umfasst die Fluidtankvorrichtung 200 von den zuvor beschriebenen Komponenten lediglich die Fluidtankhalterung 202, den Fluidtank 216, den oberstromigen Fluidleitungsanschluss 224 sowie den zwischen dem Fluidtank 216 und dem oberstromigen Fluidleitungsanschluss 224 angeordneten Fluidregler 220.

Fig. 3 zeigt eine Seitenansicht eines schematischen Aufbaus der Unkrautbekämpfungsvorrichtung 300 aus Fig. 1.

Die Unkrautbekämpfungsvorrichtung 300 umfasst eine Vorrichtungshalterung 302, an der weitere Komponenten angebracht sind und die über die nur in der linken Hälfte der Fig. 1 gezeigten Tragstrukturen 102 mit dem Fahrzeug 100 verbunden ist. Alternativ kann die Verbindung über eine an der Vorrichtungshalterung 302 vorhandene Befestigungseinrichtung, beispielsweise Tragbalken und/oder Tragstreben und/oder eine Euroaufnahme und/oder eine Dreipunktaufnahme und/ oder ein Kuppeldreieck, wie Schnellkuppeldreieck und/oder Weistedreieck, erfolgen, die an dem Fahrzeug 100 und/oder an einen am Fahrzeug 100 vorhandene Befestigungseinrichtung, beispielsweise Tragbalken und/oder Tragstreben und/oder eine Euroaufnahme und/oder eine Dreipunktaufnahme und/ oder ein Kuppeldreieck, wie Schnellkuppeldreieck und/oder Weistedreieck, angebracht werden kann. In Fig. 3 würde die jeweilige Verbindung zum Fahrzeug 100 auf der rechten Seite der schematischen Darstellung der Unkrautbekämpfungsvorrichtung 300 erfolgen. Die weiteren an der Vorrichtungshalterung 302 angebrachten Komponenten umfassen:
- einen als Plattenwärmetauscher ausgebildeten Wärmetauscher 304, der einen über einen unterstromigen Fluidleitungsanschluss 306 mit der Fluidleitung 110 verbunden Kaltfluideingang 308, einen Heißfluidausgang 310 sowie eine erste Heizfluidverbindung 312 und eine zweite Heizfluidverbindung 314 aufweist; und/oder
- eine Sprüheinrichtung 316, die beispielsweise mit einer Halterung, wie Euroaufnahme, angekoppelt ist , und die über eine Sprühleitung 318 mit einem Sprühanschluss 320 verbunden ist, der wiederum mit dem Heißfluidausgang 310 verbunden ist; und/oder
- einen Heizkreis 322, welcher mittels einer Heizkreispumpe 324 ein Heizfluid, welches sich von dem Fluid unterscheiden kann, an eine Heizeinrichtung 326, die hier mit drei Heizschwertern ausgebildet ist, vorbei und durch die beiden Heizfluidanschlüsse 312, 314 und somit auch durch den Wärmetauscher 304 im Gegenlauf zu dem Fluid zirkulieren lässt, wobei ein mit dem anderen Ende der Stromleitung 108 verbundener Vorrichtungsschaltschrank 328 wiederum die Stromversorgung der Heizkreispumpe 324 und der Heizeinrichtung 326 sicherstellt.

Der Heizkreis 322 verfügt außerdem über einen Druckausgleichsbehälter 330, um temperaturbedingte Volumenänderungen des Heizfluids aufzunehmen und so den Druck im Heizkreis 322 konstant zu halten, und eine Sicherheitseinrichtung 332, welche dazu eingerichtet ist, den Heizkreis 322 gegen unzulässige Drucküberschreitungen oder gegen Druckerhöhungen infolge unzulässiger Temperaturerhöhungen abzusichern, beispielsweise mittels eines Druckventils.

Der Wärmetauscher 304 kann alternativ oder zusätzlich eine integrierte elektrische Heizeinrichtung aufweisen. In jedem Fall aber lässt sich dadurch das von der Fluidleitung 110 kommende Fluid mittels eines Thermostats auf eine Temperatur von über 85 °C erhitzen. So kann das Fluid beispielsweise auf einen der folgenden Temperaturbereiche erhitzt werden: 85 bis 130 °C, 85 bis 120 °C, 85 bis 100 °C, 90 bis 130 °C, 90 bis 120 °C, 90 bis 100 °C, 100 bis 130 °C oder 100 bis 120 °C. Dabei können die Temperaturgrenzen jeweils eingeschossen oder ausgeschlossen sein.

Die Sprüheinrichtung 316 kann eine Lanze sein. Die Sprühleitung 318 kann ein Schlauch sein, der auf einer an der Halterung, wie Euroaufnahme, oder Vorrichtungshalterung 302 befestigten Haspel aufwickelbar sein kann. Die Sprüheinrichtung 316 kann auch ein Sprühbalken sein, der an der Halterung, wie Euroaufnahme, oder Vorrichtungshalterung 302 befestigt ist. Die Sprüheinrichtung 316 kann einen Sprühregler aufweisen, der wie hier in der Sprüheinrichtung 316 integriert sein kann. Ein Sprühregler kann alternativ oder zusätzlich auch an der Sprühleitung 318, am Sprühanschluss 320 oder am Heißfluidausgang 310 vorhanden sein. Seine Funktion besteht darin, Sprühvorgänge zu regeln, d. h. heißes Fluid aus dem Wärmetauscher 304 wahlweise nach außen durchzulassen. Der Sprühregler kann mit einer Sprühsteuereinheit der Unkrautbekämpfungsvorrichtung 300 verbunden sein. Hier ist diese Sprühsteuereinheit, wie der Sprühregler auch, in der Sprüheinrichtung 316 integriert. Die Sprühsteuereinheit ist dazu eingerichtet, den Sprühregler zum Durchlassen oder zum Blockieren eines von dem Wärmetauscher 304 kommenden heißen Fluids zu steuern. Die Sprühsteuereinheit wiederum ist mit einer Unkrauterkennungseinrichtung drahtgebunden oder drahtlos verbindbar, welche dazu eingerichtet ist, Unkraut zu erkennen und ein entsprechendes Erkennungssignal an die Sprühsteuereinheit zu senden. Erhält die Sprühsteuereinheit ein derartiges Signal, so ist sie dazu eingerichtet, den Sprühregler zum Durchlassen eines von dem Wärmetauscher 304 kommenden heißen Fluids zu steuern. Dabei kann die Durchlassdauer von dem erkannten Unkraut oder von einer Zeit, die seit dem Empfang des Signals verstrichen ist, abhängen. Nach Ablauf der Durchlassdauer und vorausgesetzt, dass kein erneutes Durchlasssignal von der Sprühsteuereinheit empfangen wurde, kehrt der Sprühregler in seinen das Fluid blockierenden Grundzustand zurück.

Die Unkrauterkennungseinrichtung kann ein externes Gerät sein, beispielsweise ein mit einer Kamera und einem entsprechenden Programm ausgerüstetes Mobiltelefon. Im Grunde ist jedes Gerät als Unkrauterkennungseinrichtung geeignet, das zumindest über eine Kamera, einen Prozessor, ein zur Unkrauterkennung aus den mittels der Kamera gewonnen Bilder geeignetes Programm, und eine drahtgebundene oder drahtlose Sendeeinheit, die das Ergebnis der Unkrauterkennung aussenden kann, verfügt. So kann eine entsprechende Halterung für ein derartiges Gerät an der Unkrautbekämpfungsvorrichtung 300, insbesondere an der Vorrichtungshalterung 302 oder an der Sprüheinrichtung 316, vorhanden sein. Auf diese Weise ließe sich, um bei dem Beispiel des Mobiltelefons zu bleiben, die Unkrautbekämpfungsvorrichtung 300 intelligent und automatisiert betreiben, da der Benutzer nicht selbst entscheiden müsste, welche Pflanzen mit dem heißen Fluid bekämpft werden müssen und für wie lange. Der Benutzer müsste lediglich die Sprüheinrichtung 316 auf eine Pflanze richten, sodass ein Sprühstoß aus der Sprüheinrichtung 316 diese treffen würde. Die Sprüheinrichtung 316 würde dann selbständig sprühen, wenn die Pflanze als Unkraut erkannt worden ist. Andernfalls würde die Sprüheinrichtung 316 nicht sprühen, und der Benutzer erkennt dadurch, dass es sich bei der betreffenden Pflanze um kein Unkraut handelt. Danach kann der Benutzer die Sprüheinrichtung 316 auf eine andere Pflanze richten, wodurch in kürzerer Zeit ein größeres Areal unkompliziert und zuverlässig abgearbeitet werden kann.

Die Unkrauterkennungseinrichtung kann ein internes Gerät sein, dass in der Unkrautbekämpfungsvorrichtung 300, insbesondere in der Vorrichtungshalterung 302 oder in der Sprüheinrichtung 316, integriert ist. Die oben erwähnte Kamera, der Prozessor, das zur Unkrauterkennung aus den mittels der Kamera gewonnen Bilder geeignete Programm, und die drahtgebundene oder drahtlose Sendeeinheit können allesamt integriert sein.

Alternative oder zusätzliche Kriterien für den Sprühbeginn und/oder die Sprühdauer können sein:
- zentrale oder dezentrale Lage des erkannten Unkrauts auf einem von der Unkrauterkennungseinrichtung verwendeten Bild; und/oder
- Anteil von Unkraut auf einem von der Unkrauterkennungseinrichtung verwendeten Bild.

So kann der Sprühbeginn erst erfolgen, wenn Unkraut zentral im Bild, beispielsweise im mittleren Drittel des Bildes bezüglich der Längs- und Querausdehnung des Bildes, erkannt wird. Die Sprühdauer kann bei einer derart zentralen Lage im Bild kürzer sein als bei einer dezentralen Lage.

Zusätzlich oder alternativ kann der Sprühbeginn erst erfolgen, wenn ein Schwellwert an Unkraut auf dem Bild überschritten wird, beispielsweise ein Anteil von Unkraut auf dem Bild von über 30%, über 50% oder über 70%. Die Sprühdauer kann bei einem höheren Anteil länger ausfallen als bei einem geringeren Anteil.

Mit "kann" sind insbesondere optionale Merkmale der Erfindung bezeichnet. Demzufolge gibt es auch Weiterbildungen und/oder Ausführungsbeispiele der Erfindung, die zusätzlich oder alternativ das jeweilige Merkmal oder die jeweiligen Merkmale aufweisen.

Aus den vorliegend offenbarten Merkmalskombinationen können bedarfsweise auch isolierte Merkmale herausgegriffen und unter Auflösung eines zwischen den Merkmalen gegebenenfalls bestehenden strukturellen und/oder funktionellen Zusammenhangs in Kombination mit anderen Merkmalen zur Abgrenzung des Anspruchsgegenstands verwendet werden.

### Bezugszeichen

- 100: Fahrzeug
- 102: Tragstrukturen
- 104: Fahrzeugfront
- 106: Fahrzeugheck
- 108: Stromleitung
- 110: Fluidleitung

- 200: Fluidtankvorrichtung
- 202: Fluidtankhalterung
- 204: Getriebe
- 206: Getriebeeingang
- 208: erster Getriebeausgang
- 210: zweiter Getriebeausgang
- 212: Generator
- 214: Fluidtankschaltschrank
- 216: Fluidtank
- 218: Fluidtankleitung
- 220: Fluidregler
- 222: Fluidpumpe
- 224: oberstromiger Fluidleitungsanschluss

- 300: Unkrautbekämpfungsvorrichtung
- 302: Vorrichtungshalterung
- 304: Wärmetauscher
- 306: unterstromiger Fluidleitungsanschluss
- 308: Kaltfluideingang
- 310: Heißfluidausgang
- 312: erste Heizfluidverbindung
- 314: zweite Heizfluidverbindung
- 316: Sprüheinrichtung
- 318: Sprühleitung
- 320: Sprühanschluss
- 322: Heizkreis
- 324: Heizkreispumpe
- 326: Heizeinrichtung
- 328: Vorrichtungsschaltschrank
- 330: Druckausgleichsbehälter
- 332: Sicherheitseinrichtung

## Patentansprüche

1. Unkrautbekämpfungsvorrichtung (300), aufweisend:
- einen Wärmetauscher (304), der einen Kaltfluideingang (308) sowie einen Heißfluidausgang (310) aufweist, und
- eine Sprüheinrichtung (316), die mit dem Heißfluidausgang (310) verbunden ist,
**dadurch gekennzeichnet, dass**
- der Wärmetauscher (304) als Plattenwärmetauscher ausgebildet ist, der den über einen unterstromigen Fluidleitungsanschluss (306) mit einer Fluidleitung (111) verbundenen Kaltfluideingang (308), den Heißfluideingang (310) sowie eine erste Heizfluidverbindung (312) und eine zweite Heizfluidverbindung (314) aufweist und/oder
- dass die Unkrautbekämpfungsvorrichtung (300) einen Heizkreis (322), welcher mittels einer Heizkreispumpe (324) ein Heizfluid an eine Heizeinrichtung (326) vorbei und durch Heizfluidanschlüsse (312, 314) im Gegenlauf zu einem Fluid zirkulieren lässt, aufweist.

2. Unkrautbekämpfungsvorrichtung (300) nach Anspruch 1,
**dadurch gekennzeichnet, dass**
der Wärmetauscher (304) dazu eingerichtet ist, Wasser auf eine Temperatur von mehr als 85 °C zu erhitzen.

3. Unkrautbekämpfungsvorrichtung (300) nach wenigstens einem der vorhergehenden Ansprüche,
**dadurch gekennzeichnet, dass**
die Sprüheinrichtung (316) mit einer Unkrauterkennungseinrichtung verbindbar und dazu eingerichtet ist, automatisch nur dann zu sprühen, wenn ein Unkraut von der Unkrauterkennungseinrichtung erkannt wird.

4. Unkrautbekämpfungsvorrichtung (300) nach Anspruch 3,
**dadurch gekennzeichnet, dass**
die Unkrautbekämpfungsvorrichtung (300) die Unkrauterkennungseinrichtung aufweist und ferner dazu eingerichtet ist, die Sprühdauer der Sprüheinrichtung (316) in Abhängigkeit von dem erkannten Unkraut und/oder einer seit dem Erkennen des Unkrauts verstrichenen Zeit zu steuern.

5. Unkrautbekämpfungsvorrichtung (300) nach wenigstens einem der vorhergehenden Ansprüche,
**dadurch gekennzeichnet, dass**
die Unkrautbekämpfungsvorrichtung (300) ferner eine, insbesondere standardisierte, Befestigungseinrichtung, beispielsweise eine Tragstruktur und/oder Tragbalken und/oder Tragstreben und/oder eine Euroaufnahme und/oder eine Dreipunktaufnahme und/oder ein Kuppeldreieck, wie Schnellkuppeldreieck und/oder Weistedreieck, aufweist.

6. Unkrautbekämpfungssystem, aufweisend:
- eine Unkrautbekämpfungsvorrichtung (300) nach wenigstens einem der vorhergehenden Ansprüche, und
- eine Fluidtankvorrichtung (200) mit einem Fluidtank (216), der mit dem Kaltfluideingang (308) verbindbar ist.

7. Unkrautbekämpfungssystem nach Anspruch 6,
**dadurch gekennzeichnet, dass**
die Fluidtankvorrichtung (200) ferner eine, insbesondere standardisierte, Befestigungseinrichtung, beispielsweise eine eine Tragstruktur und/oder Tragbalken und/oder Tragstreben und/oder Euroaufnahme und/oder eine Dreipunktaufnahme und/oder ein Kuppeldreieck, wie Schnellkuppeldreieck und/oder Weistedreieck, aufweist.

8. Fahrzeug (100), aufweisend:
- eine Unkrautbekämpfungsvorrichtung (300) nach wenigstens einem der Ansprüche 1 bis 5, oder
- ein Unkrautbekämpfungssystem nach Anspruch 6 oder 7.

9. Fahrzeug (100) nach Anspruch 8,
**dadurch gekennzeichnet, dass**
die Unkrautbekämpfungsvorrichtung (300) oder das Unkrautbekämpfungssystem an eine Stromversorgung des Fahrzeugs (100) angeschlossen ist.
